Europäisches Patentamt

European Patent Office

Office européen des brevets

(11) Publication number: **0 193 740**
**B1**

## EUROPEAN PATENT SPECIFICATION

(45) Date of publication of patent specification: **14.06.89**

(51) Int. Cl.⁴: **B 65 G 47/29**

(21) Application number: **86101383.7**

(22) Date of filing: **03.02.86**

(54) A blocking device for objects conveyed upon a conveyor track.

(30) Priority: **05.03.85 SE 8501057**

(43) Date of publication of application:
**10.09.86 Bulletin 86/37**

(45) Publication of the grant of the patent:
**14.06.89 Bulletin 89/24**

(84) Designated Contracting States:
**DE FR GB IT NL**

(56) References cited:
**DE-A-3 228 312**
**US-A-4 088 221**

(73) Proprietor: **SKF Nova AB**
**S-415 50 Göteborg (SE)**

(72) Inventor: **Adolfsson, Rune**
**Skyttegatan 4**
**S-50243 Borâs (SE)**

(74) Representative: **Andreasson, Ralph et al**
**c/o Aktiebolaget SKF**
**S-415 50 Göteborg (SE)**

Courier Press, Leamington Spa, England.

## Description

The invention refers to a combination of a blocking device and a conveyor of the type defined in the preamble of claim 1 (as known from US—A—4088221 or DE—A—3228312 for example).

When conveying objects along a conveyor track, e.g. a chain conveyor, it is often necessary in some positions and at certain times to block the motion of the objects conveyed on the conveyor track, whereas the propulsion of objects in other parts of the track is maintained. For this purpose it is earlier known to use movable stop lugs, which can be displaced into and out of the conveyance path of the objects. The lugs thereby are designed as pivotable rocker arms or, as disclosed in DE—A—3228312 and US—A—4088221, axially displaceable catch fingers, which are movable perpendicularly to the motion direction of the conveyor track. Rocker arms incorporate several components and are therefore rather expensive and complex, whereas a catch finger movable perpendicularly to the conveyor track, will cause wear to the arrested object when the finger is displaced in order to release the object and thereby engages a surface thereof. It is certainly possible to reduce the friction between the finger and the object, e.g. by providing the finger with a roller supported thereupon and contacting the object, but this step will make the device more expensive and complex.

The purpose of the present invention is to provide a combination of a blocking device and a conveyor of the type mentioned in the preamble, which ia simple and inexpensive to manufacture, which has a simple function and which will not subject the objects arrested to wear when the blocking device is moved to release position. These objects have been achieved by the characterizing features stated in the appending claims. A blocking device according to the invention can be made with one movable part only, which does not slide along the arrested object, when the catch is released.

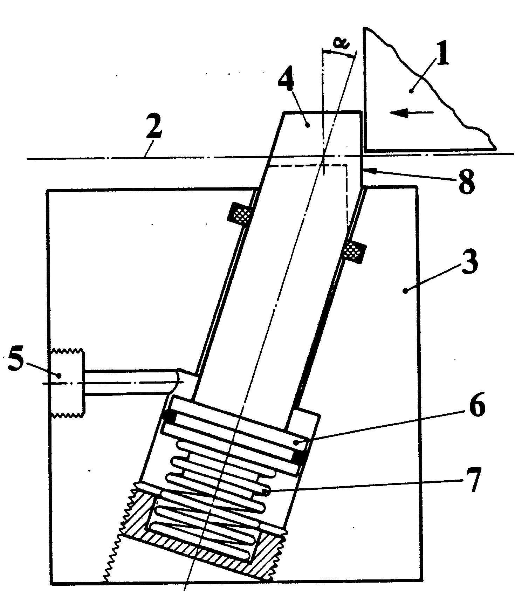

The invention is herein after further described with reference to the accompanying drawing, which shows a diagrammatic longitudinal section through a device according to one embodiment of the invention.

An object 1, e.g. a load carrier in a transport system, is arranged upon a conveyor track 2, e.g. a chain conveyor with driven chains, whereupon the object 1 rests. The object is thereby fed in the direction of the arrow. A blocking device is provided at a position along the conveyor track in order to control the feed of objects along the track. The blocking device incorporates a casing 3, which can be attached in a desired position to the conveyor and in which casing is arranged a catch finger 4 displaceable into and out of the conveyance path of the objects, said catch finger in blocking position containing a forward end surface of the object, thus that this cannot pass the blocking device but stops in a predetermined position, whereby the propulsion power e.g. from the friction force of the object against a driven chain will be absorbed by the catch finger 4 and the blocking device. The power thus absorbed is dependent on such factors as the weight of the object and the friction coefficient in the contact between the object and the chain. The catch finger is slidably supported in a recess in the casing 3, adapted to the shape of the finger.

When the object shall be released from the blocking device and be moved further, the catch finger must be removed from its blocking position, and this is achieved thereby that it is displaced in its longitudinal direction. In the embodiment shown the displacement is effected by introduction of a pressure medium through a conduit 5 arranged to extend through the casing 3 into a cylindrical bore in which is displaceably arranged a plunger 6 which is connected to the catch finger 4. The plunger and thereby also the catch finger are thereby displaced against the action of a spring 7 which returns the catch finger to blocking position, when the supply of pressure medium and the pressure upon the plunger ceases.

If the catch finger during its displacement to release position moves perpendicularly to the conveying direction of the object, then sliding and therefore friction and wear will occur in the contact between the object and the catch finger. This can, according to the invention, be avoided if the catch finger is arranged thus that it is displaceable rectilinearly in a direction forming an oblique angle with the surface of the conveyor track in front of the blocking device, and the displacement to release position is effected with a movement component, pointing in the same direction as the direction of the object motion. The angle and the acceleration of the finger thereby are adapted so that the acceleration component in the movement direction of the objects conveyed in the conveyor track will be bigger than the acceleration of an object which is momentarily released from a movement preventing catch. An object conveyed upon a chain conveyor when being released obtains an acceleration of the size $\mu.g$, where $\mu$ = the friction coefficient at the contact between the chain and the object and $g$ = the gravitational constant, whereby the acceleration component in the transport direction of the objects at the catch finger shall be bigger than this value, i.e.

$$\mu.g < a \sin\alpha$$

wherein $\alpha$ = the angle formed by the finger against the normal of the surface of the conveyor track and $a$ = the acceleration of the finger in the direction of movement at the releasing movement. During normal conditions to bring about this it is sufficient to connect the conduit 5 to a conventional pressure air duct, via a valve, which can be rapidly opened. If an extremely rapid acceleration is required it is possible e.g. to provide the outlet of the conduit 5 in the cylindric bore in the casing 3, which bore contains the plunger 6, with means which at a certain pressure will give a momentary pressure medium impact, whereby the elasticity and inertia depending on the valve and the volume of the conduit 5 are eliminated.

The surface of the object 1 which contacts against the catch finger is generally arranged essentially perpendicularly to the extension of the track 2. It is therefor often more expedient if a portion of the catch finger has a surface intended for contact against the object 1 provided at the free end of the finger, which surface extends perpendicularly to the motion direction of the object in the track. This can most simply be obtained by providing the free end of the catch finger with a chamfer 8.

A device according to the invention may have other designs and it can be used in other connections than those described hereinbefore. The device may as an example be used in inclined conveyor devices, wherein the objects are driven by the attraction of gravity. The displacement of the catch finger can be effected with other than pressure medium based means, e.g. electro magnetical or mechanical. The shape of the catch finger can be adapted to objects of different types and it is preferably such that the finger when axially displaced is prevented from being rotated in the casing 3.

## Claims

1. A combination of a blocking device and a conveyor, said blocking device being adapted to block the motion of an object (1) conveyed on a conveyor track (2), which objects are subjected to a continuous conveying force, the blocking device incorporating a catch finger (4) displaceable into and out of the conveyance path of the objects, which catch finger in a blocking position contacts a forward end surface of the conveyed object, characterized in that the catch finger (4) is displaceable rectilinearly along a line that lies at an angle (α) to the normal to the surface of the conveyor track (2) and that the said line is positioned such that the catch finger (4) moves from the engaged position in which it blocks the said conveyed object (1) to the disengaged position in which the said object (1) is released with a component of motion in the direction of conveyance, said catch finger being associated with power means (5) adapted to give the catch finger an acceleration of a magnitude high enough to ensure that said catch finger will be substantially friction free in moving away from said object.

2. The combination of a blocking device and a conveyor as claimed in claim 1, characterized in that the blocking face (8) of the catch finger (4) has a surface which extends generally perpendicular to the direction of motion of the conveyed object on the conveyor.

3. The combination of a blocking device and a conveyor as claimed in claim 1, wherein the objects (1) upon release obtain an acceleration of the magnitude $\mu g$, where $\mu$ = the friction coefficient at the contact between the conveyor track and the object and g = the gravitational constant, characterized in that the power means (5) is dimensioned such that $\mu g < a \sin \alpha$ where a = the acceleration of the catch finger along said line, and α = the angle formed by the catch finger against the normal to the surface of the conveyor track.

## Patentansprüche

1. Eine Kombination einer Anhaltevorrichtung und eines Förderers, bei der die Anhaltevorrichtung zum Blockieren der Bewegung eines entlang einer Förderbahn (2) geförderten Gegenstandes (1) ausgebildet ist, diese Gegenstände einer kontinuierlichen Bewgungskraft ausgesetzt sind und in der Anhaltevorrichtung ein in die Förderbahn der Gegenstände hinein und aus dieser heraus bewegbarer Haltefinger (4) eingebaut ist, wobei der in blockierende Haltestellung gebrachte Haltefinger (4) eine vordere Stirnfläche des geförderten Gegenstandes berührt,

dadurch gekennzeichnet, daß der Haltefinger (4) entlang einer in einem Winkel (α) zur Normalen der Fläche der Förderbahn (2) stehenden Linie geradlinig beweglich ist und daß diese Linie derart angeordnet ist, daß der Haltefinger (4) von seiner Haltestellung, in der dieser den besagten geförderten Gegenstand (1) blockiert, in eine Freigabestellung, in welcher der besagte Gegenstand (1) freigegeben ist, mit einer in Richtung der Förderbewegung gerichteten Bewegungskomponente bewegbar ist, wobei der besagte Haltefinger mit Kraftmitteln (5) verbunden ist, welche dem Haltefinger eine Beschleunigung in einer ausreichenden Größe geben, so daß der besagte Haltefinger bei seiner Wegbewegung vom basagten Gegenstand im wesentlichen reibungsfrei ist.

2. Die Kombination einer Anhaltevorrichtung und eines Förderers nach Anspruch 1, dadurch gekennzeichnet, daß die blockierende Stirn (8) der Haltefingers (4) eine Oberfläche aufweist, welche im wesentlichen rechtwinkelig zur Bewegungsrichtung des auf dem Förderer geförderten Gegenstandes verläuft.

3. Die Kombination einer Anhaltevorrichtung und eines Förderers nach Anspruch 1, bei der die Gegenstände (1) bei ihrer Freigabe eine Beschleunigung in der Größe $\mu.g$ erhalten, wobei $\mu$ = Reibungskoeffizient in Kontakt zwischen der Förderbahn und dem Gegenstand und g = Erdbeschleunigung, dadurch gekennzeichnet, daß die Kraftmittel (5) derart bemessen sind, daß

$$\mu.g < a.\sin \alpha$$

wobei a = Beschleunigung des Haltefingers entlang der besagten Linie und α = Winkel, der zwischen dem Haltefinger und der Normalen auf der Fläche der Förderbahn gebildet wird.

## Revendications

1. Combinaison d'un dispositif d'immobilisation et d'un convoyeur, ledit dispositif d'immbolisation étant adapté pour arrêter le mouvement d'un objet (1) transporté sur une voie de conveyeur (2), lesquels objets sont soumis à un effort d'avancement continu, et le dispositif de blocage comprenant un doigt d'arrêt (4) qui peut être amené sur la voie de convoyage des objets et en être retiré, ledit doigt d'arrête en position de blocage venant en contact avec une surface terminale à l'avant de l'objet transporté,

caractérisé en ce que el doigt d'arrêt (4) peut se mouvoir de façon rectiligne le long d'une ligne qui forme un angle (α) avec la normale à la surface de la voie de conveyeur (2) et en ce que ladite ligne est positionnée de telle façon que le doigt d'arrêt (4) se meut de la position engagée dans laquelle il bloque ledit objet transporté (1), à la position dégagée dans laquelle ledit objet (1) est relâché, avec une composante de mouvement dans la direction du transport, ledit doigt d'arrêt étant associé à un moyen fournissant l'énergie (5) adapté pour donner au doigt d'arrêt une accélération d'une intensité suffisante pour garantir que ledit doigt d'arrêt sera essentiellement exempt de frottement lors de son mouvement de retrait du dit objet.

2. Combinaison d'un dispositif d'immobilisation et d'un convoyeur selon revendication 1, caractérisé en ce que la face d'immobilisation (8) sur le doigt d'arrêt (4) présente une surface qui s'étend généralement de façon perpendiculaire à la direction du mouvement de l'objet transporté sur le conveyeur.

3. Combinaison d'un dispositif d'immobilisation et d'un convoyeur selon revendication 1, où les objets (1) au dégagement reçoivent une accélération d'intensité $\mu.g$, avec $\mu$ = coefficient de frottement au contact entre la voie de conveyeur et l'objet, et g = accélération de la pesanteur, caractérisé en ce que le moyen fournissant l'énergie (5) est dimensionné de telle sorte que $\mu.g < a.\sin \alpha$, où a = accélération du doigt d'arrêt le long de ladite ligne, et α = angle formé par le doigt d'arrêt avec la normale à la surface de la voie du conveyeur.